# EUROPEAN PATENT APPLICATION

(11) **EP 2 268 048 A2**
(43) Date of publication of application: **29.12.2010**
(21) Application number: 10166875.4
(22) Date of filing: 22.06.2010
(51) Int. Cl.: H04N 13/00, G01C 11/06, G06T 7/00

(54) **Distance measuring apparatus having dual stereo camera**

(30) Priority: 25.06.2009 KR 20090056998
(71) Applicant: SiliconFile Technologies Inc., Seoul (KR)
(72) Inventor: Lee, Byoung Su, Jeollanam-do (KR)
(74) Representative: Neobard, William John

(57) **Abstract**

A distance measuring apparatus having dual stereo cameras includes a first stereo camera including left and right CMOS image sensors provided on one board and detecting parallax of a reference object to extract distance information, the left CMOS image sensor being spaced apart from the right CMOS image sensor at a predetermined interval, a second stereo camera separated from the first stereo camera at a predetermined distance, including left and right CMOS image sensors provided on one board, and detecting parallax of the reference object to extract distance information, the left CMOS image sensor being spaced apart from the right CMOS image sensor at a predetermined interval, and a depth map matching unit that extracts distance information on the reference object by comparing the distance information on the reference object acquired through the first stereo camera with the distance information on the reference object acquired through the second stereo camera.

## Description

The present invention relates to distance measuring. Embodiments relate to a distance measuring apparatus having dual stereo cameras, which can extract more accurate distance information by matching depth maps on a reference object acquired from two stereo cameras having two image sensors mounted on one board, respectively.

With the development of information communication technology, a multimedia service supporting two-dimensional image and voice has been provided through a digital terminal that processes characters, voice and images at a high speed, and research into a three-dimensional information communication service providing a three-dimensionally realistic multimedia service has been actively conducted.

In general, a three-dimensional image having a three-dimensional effect is acquired by the principle of stereo vision through both eyes. An important factor of a three-dimensional effect is parallax of both eyes, that is, binocular parallax caused by an interval (approximately 65mm) between both eyes. Thus, a person sees different two-dimensional images through left and right eyes, the two images are transmitted to a cerebrum through the retina, and the cerebrum combines the two images to produce the original depth and actual effects of a three-dimensional image, which is generally called sterography.

Recently, research into a stereo vision system capable of detecting the distance to an object located in front of the system has been conducted. Such a stereo vision system uses two stereo cameras that maps a three-dimensional space into a two-dimensional space through prospective transformation, and recovers three-dimensional information from a geometrical arrangement of the stereo cameras.

In the conventional method for achieving distance information as described above, left-side image data and right-side image data are acquired using two cameras (an interval between the two cameras is approximately 10cm to approximately 20cm). The left-side image data and the right-side image data are subject to an outline detection process, and matching points between the left-side image data and the right-side image data are found, so that distance information is acquired.

However, in the above method, complicated calculations are required for finding the same point by comparing the two images. In most cases, edges of images are extracted, corners and the like are regarded as the same point, and depth information is acquired. Since such image processing and determination of the same point and the like are complicated and are disadvantageous in terms of accuracy of distance measurement, accurate distance may not be measured and many processes for correcting the disadvantages are required.

Recently, research into wafer-level stereo cameras (an interval between the cameras is approximately 1cm to approximately 2cm), which extract three-dimensional information over a short distance by processing images acquired through left and right image sensors provided on one board, has been conducted.

However, in the case of the wafer-level stereo cameras, since two image sensors are provided on one wafer, the distance between the centers of the two image sensors is inevitably shortened, so that distance information on an object far from the cameras may not be accurately analyzed.

Accordingly, the present invention has been made in an effort to solve problems occurring in the related art.

An embodiment provides a distance measuring apparatus having dual stereo cameras, which can improve the accuracy of distance information by matching distance information with low accuracy acquired from one wafer-level stereo camera with distance information with low accuracy acquired from another wafer-level stereo camera opposite to the one wafer-level stereo camera.

In one aspect, there is provided a distance measuring apparatus having dual stereo cameras, including: a first stereo camera including a left CMOS image sensor and a right CMOS image sensor provided on one board and detecting parallax of a reference object to extract distance information, the left CMOS image sensor being spaced apart from the right CMOS image sensor at a predetermined interval; a second stereo camera separated from the first stereo camera at a predetermined distance, including a left CMOS image sensor and a right CMOS image sensor provided on one board, and detecting parallax of the reference object to extract distance information, the left CMOS image sensor being spaced apart from the right CMOS image sensor at a predetermined interval; and a depth map matching unit that extracts distance information on the reference object by comparing the distance information on the reference object acquired through the first stereo camera with the distance information on the reference object acquired through the second stereo camera.

Such a distance measuring apparatus having dual stereo cameras can improve the accuracy of distance information by using two wafer-level stereo cameras and does not require calibration for alignment of the cameras.

Furthermore, since the wafer-level stereo cameras have a separate space axis, the distance between the image sensors of the two wafer-level stereo cameras can be adjusted and a tilt function between the image sensors can be performed, so that distance measurement can be facilitated.

In the drawings:
FIG. 1 is a diagram illustrating the configuration of a distance measuring apparatus having dual stereo cameras in accordance with an embodiment of the present invention;
FIG. 2 is a diagram schematically illustrating an example in which accurate distance information is extracted using a distance measuring apparatus having dual stereo cameras in accordance with the present invention; and
FIGS. 3A and 3B are diagrams schematically illustrating another example in which accurate distance information is extracted using a distance measuring apparatus having dual stereo cameras in accordance with the present invention.

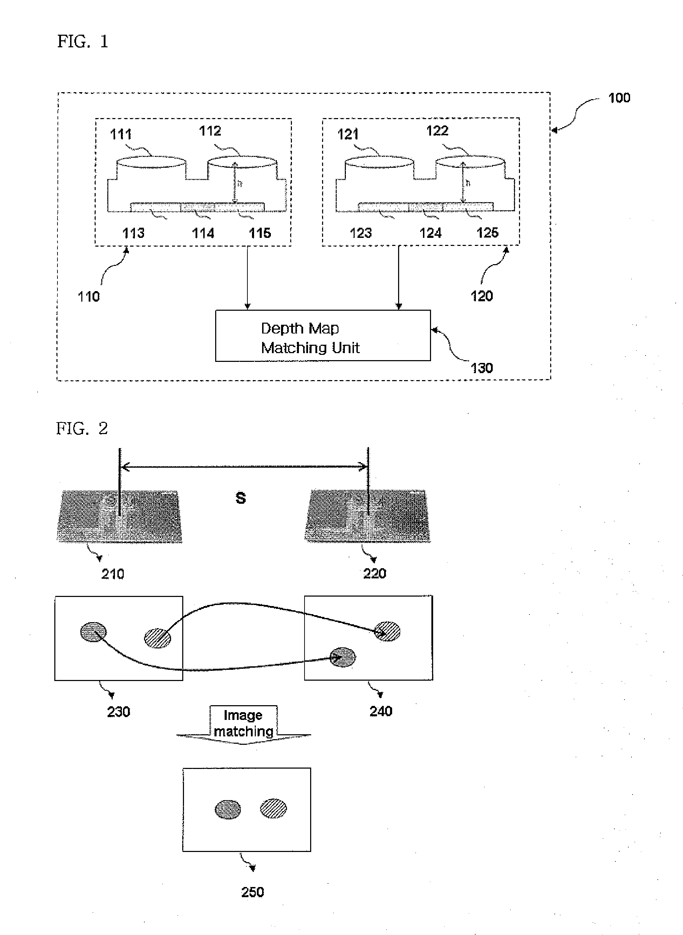

Referring to FIG. 1, the distance measuring apparatus 100 using the dual stereo cameras in accordance with the present invention includes a first stereo camera 110, a second stereo camera 120 and a depth map matching unit 130.

The first stereo camera 110 includes a left lens 111, a right lens 112, a left image sensor 113, a right image sensor 115 and a signal processing section 114.

The left lens 111 and the right lens 112 receive light from a point light source on the same plane.

The left image sensor 113 and the right image sensor 115 are located below the left lens 111 and the right lens 112, respectively, and are spaced apart from each other on one board at a predetermined interval.

The signal processing section 114 is provided between the left image sensor 113 and the right image sensor 115 to receive images acquired through the left image sensor 113 and the right image sensor 115, thereby extracting distance information of the point light source.

The second stereo camera 120 is spaced apart from the first stereo camera 110 at a predetermined distance. Since it has the same configuration as that of the first stereo camera 110, details thereof will be omitted.

The depth map matching unit 130 compares distance information on a reference object acquired through the first stereo camera 110 with distance information on the reference object acquired through the second stereo camera 120, thereby extracting accurate distance information on the reference object.

As compared with the related art in which the conventional distance measuring apparatus using stereo cameras compare a left image with a right image, the distance measuring apparatus in accordance with the present invention matches a depth map acquired through the first stereo camera with a depth map acquired through the second stereo camera.

Turning to FIG. 2, a depth map 230 on a reference object is acquired through a first wafer-level stereo camera 210, which has two image sensors on one board, by binocular parallax. The accuracy of distance information acquired through the stereo camera is a function of the distance between the two image sensors, and, in general, distance resolution is reduced as the distance between the two image sensors is short. Since the interval (approximately 1cm to approximately 2cm) between the wafer-level stereo cameras is smaller than the interval (approximately 10cm to approximately 15cm) between general stereo cameras, a large error occurs in the depth map 230 acquired through the wafer-level stereo camera in terms of distance accuracy.

Furthermore, a depth map 240 on the reference object is acquired through a second wafer-level stereo camera 220, which has two image sensors on one board, by binocular parallax.

Then, the depth map 230 acquired through the first stereo camera 210 is compared with and matched with the depth map 240 acquired through the second stereo camera 220 by using the depth map matching unit, so that a more accurate depth map 250 can be acquired.

That is, the distance measuring apparatus having the dual stereo cameras in accordance with the present invention is **characterized in that** the distance information with low accuracy acquired from one wafer-level stereo camera is compared with the distance information with low accuracy acquired from another wafer-level stereo camera opposite to the one wafer-level stereo camera and the depth maps are matched with each other, thereby improving the accuracy of distance information.

In the case of the conventional stereo cameras, when the position of one camera is changed, the stereo cameras are required to be calibrated. However, since the first stereo camera and the second stereo camera of the distance measuring apparatus having the dual stereo cameras in accordance with the present invention include the two image sensors mounted on one board, respectively, separate calibration for alignment of the cameras is not required.

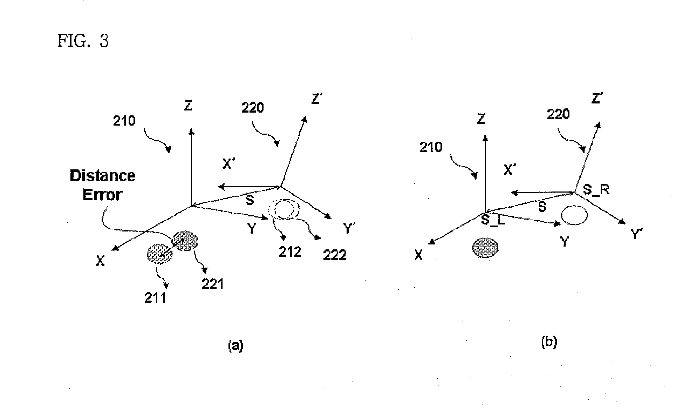

As shown in FIGS. 3A and 3B, distance information acquired through the first stereo camera 210 and the distance information acquired through the second stereo camera 220 have an error, but a depth map with high distance resolution can be finally acquired by matching the two pieces of distance information.

Furthermore, since the first stereo camera 210 and the second stereo camera 220 have a separate space axis (a Z axis) with respect to axes (X and Y axes) of the plane on which the two image sensors are mounted, the distance S and tilt angles between the two cameras can be adjusted according to the position of an object to be measured, resulting in the extraction of accurate distance information.

When the distance measuring apparatus having the dual stereo cameras in accordance with the present invention is used for a vehicle, the distance between the first stereo camera 210 and the second stereo camera 220 can be adjusted in the range of 10cm or less. When the distance measuring apparatus having the dual stereo cameras in accordance with the present invention is used for measurement, the distance between the first stereo camera 210 and the second stereo camera 220 can be adjusted in the range of 15cm or more. Consequently, information over a long distance can be acquired.

Although an embodiment of the present invention has been described for illustrative purposes, those skilled in the art will appreciate that various modifications, additions and substitutions are possible, without departing from the scope of the invention as recited in the accompanying claims.

## Claims

1. A distance measuring apparatus having dual stereo cameras, comprising:
a first stereo camera including a left CMOS image sensor and a right CMOS image sensor provided on one board and arranged to detect parallax of a reference object to extract distance information, the left CMOS image sensor being spaced apart from the right CMOS image sensor at a predetermined interval;
a second stereo camera separated from the first stereo camera at a predetermined distance, including a left CMOS image sensor and a right CMOS image sensor provided on one board, and arranged to detect parallax of the reference object to extract distance information, the left CMOS image sensor being spaced apart from the right CMOS image sensor at a predetermined interval; and
a depth map matching unit arranged to extract distance information on the reference object by comparing the distance information on the reference object acquired through the first stereo camera with the distance information on the reference object acquired through the second stereo camera.

2. A distance measuring apparatus according to claim 1, wherein each of the first stereo camera and the second stereo camera comprises:
a left lens and a right lens arranged to receive light from a point light source on the same plane;
the left CMOS image sensor and the right CMOS image sensor provided on one board at the predetermined interval while being vertically spaced apart from the left lens and the right lens by a predetermined distance, respectively; and
a signal processing section provided between the left CMOS image sensor and the right CMOS image sensor, and arranged to receive images acquired through the two CMOS image sensors to extract three-dimensional information of the point light source.

3. A distance measuring apparatus according to claim 2, wherein the depth map matching unit is arranged to extract the distance information on the reference object by matching a depth map from the distance information on the reference object acquired through the first stereo camera with a depth map from the distance information on the reference object acquired through the second stereo camera.

4. A distance measuring apparatus according to claim 3, wherein the distance between the first stereo camera and the second stereo camera is variable.

5. A distance measuring apparatus according to claim 3, wherein the first stereo camera and the second stereo camera are arranged to rotate according to a position of the reference object to be measured.
